# EUROPÄISCHE PATENTSCHRIFT

(11) **EP 4 476 467 B1**
(45) Veröffentlichungstag und Bekanntmachung des Hinweises auf die Patenterteilung: **09.12.2026**
(21) Anmeldenummer: 23703127.3
(22) Anmeldetag: 19.01.2023
(51) Int. Cl.: F16D 55/36

(54) **MEHRKOLBENAUSRÜCKSYSTEM FÜR EINE BREMSVORRICHTUNG EINES FAHRZEUGS, BREMSVORRICHTUNG FÜR EIN FAHRZEUG MIT DEM MEHRKOLBENAUSRÜCKSYSTEM UND GETRIEBEANORDNUNG FÜR EIN FAHRZEUG MIT DER BREMSVORRICHTUNG**
MULTI-PISTON RELEASE SYSTEM FOR A VEHICLE BRAKE DEVICE, BRAKE DEVICE FOR A VEHICLE WITH THE MULTI-PISTON RELEASE SYSTEM, AND TRANSMISSION ARRANGEMENT FOR A VEHICLE WITH THE BRAKE DEVICE
SYSTÈME DE DÉGAGEMENT À PISTONS MULTIPLES POUR UN DISPOSITIF DE FREINAGE DE VÉHICULE, DISPOSITIF DE FREINAGE POUR UN VÉHICULE AVEC LE SYSTÈME DE DÉGAGEMENT À PISTONS MULTIPLES ET DISPOSITIF DE TRANSMISSION POUR UN VÉHICULE AVEC LE DISPOSITIF DE FREINAGE

(30) Priorität: 11.02.2022 DE 102022103228
(43) Veröffentlichungstag der Anmeldung: 18.12.2024
(73) Patentinhaber: Schaeffler Technologies AG & Co. KG, 91074 Herzogenaurach (DE)
(72) Erfinder: ORTMANN, Simon, 76532 Baden-Baden (DE)
(74) Vertreter: Schaeffler Technologies
(86) Internationale Anmeldenummer: PCT/DE2023/100038
(87) Internationale Veröffentlichungsnummer: WO 2023/151743

(56) Entgegenhaltungen:
- EP-A1- 2 615 005
- EP-A1- 3 184 844
- GB-A- 2 197 701
- US-A1- 2008 092 641
- US-A1- 2016 281 808
- US-A1- 2020 307 530

## Beschreibung

Die Erfindung betrifft ein Mehrkolbenausrücksystem für eine Bremsvorrichtung eines Fahrzeugs mit den Merkmalen des Oberbegriffs des Anspruchs 1, eine Bremsvorrichtung für ein Fahrzeug mit dem Mehrkolbenausrücksystem und eine Getriebeanordnung für ein Fahrzeug mit der Bremsvorrichtung.

Kolbenausrücksysteme zur Betätigung von Kupplungen oder Bremsen in einem elektrischen Antriebsstrang eines Fahrzeugs sind aus dem Stand der Technik hinreichend bekannt. Beispielsweise beschreibt die Druckschrift DE 10 2020 104 771 A1 einen Nehmerzylinder für ein Ausrücksystem eines Fahrzeugs mit einem Gehäuse, welches einen Druckraum ausbildet und mit einem Kolben, der in dem Druckraum axial beweglich angeordnet ist. Zur Betätigung einer Kupplung kann der Kolben eine Betätigungskraft in die Kupplung einleiten. Aus der EP 2 615 005 A1 ist ein Kolbenausrücksystem bekannt. Weiterer Stand der Technik ist in der US 2020/307530 A1, der EP 3 184 844 A1 sowie der US 2008/092641 A1 bekannt. In der GB 2 197 701 A ist ein Mehrkolbenausrücksystem für eine Bremsvorrichtung eines Fahrzeugs mit mehreren Kolbenbautgruppen nach dem Oberbegriff des Anspruchs 1 offenbart.

Aufgabe der Erfindung ist es, eine funktional verbesserte Bremsvorrichtung für ein Fahrzeug bereitzustellen. Diese Aufgabe wird durch ein Mehrkolbenausrücksystem für eine Bremsvorrichtung eines Fahrzeugs mit den Merkmalen des Anspruchs 1, durch eine Bremsvorrichtung für ein Fahrzeug mit dem Mehrkolbenausrücksystem mit den Merkmalen des Anspruchs 5 und durch eine Getriebeanordnung für ein Fahrzeug mit der Bremsvorrichtung mit den Merkmalen des Anspruchs 7 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Mehrkolbenausrücksystem, welches zur Integration in eine Bremsvorrichtung eines Fahrzeugs ausgebildet ist. Vorzugsweise ist das Mehrkolbenausrücksystem zur Betätigung einer Bremseinrichtung ausgebildet, wobei die Bremseinrichtung ein Bestandteil der Bremsvorrichtung ist. Zum Beispiel ist die Bremseinrichtung eine nasslaufende Lamellenbetriebsbremse, welche innerhalb eines Nassraums eines Elektrofahrzeugs oder Hybridfahrzeugs anordbar oder angeordnet ist. Vorzugsweise weist die Lamellenbetriebsbremse eine Lamellenpaketanordnung mit einer Mehrzahl an Reiblamellen auf. Der Nassraum kann durch ein Getriebegehäuse einer Getriebeanordnung für das Fahrzeug gebildet sein. Das Fahrzeug ist vorzugsweise ein Elektrofahrzeug, insbesondere ein elektrisch oder hybrid angetriebener PKW oder Nutzfahrzeug.

Das Mehrkolbenausrücksystem umfasst ein Ringgehäuse. Das Ringgehäuse weist eine Hauptachse auf, das eine axiale Richtung definiert. Das Ringgehäuse ist insbesondere konzentrisch zu der Hauptachse angeordnet.

Vorzugsweise weist das Ringgehäuse mindestens einen Strömungskanal, einen Fluideinlass und mehrere Druckräume auf, welche über den Strömungskanal strömungstechnisch miteinander verbunden sind. Insbesondere kann ein Fluid, z.B. eine Hydraulikflüssigkeit, durch den Fluideinlass in den Strömungskanal eingeleitet werden und von dort aus in die Druckräume strömen.

Das Ringgehäuse umfasst mehrere Gehäuseabschnitte. In jedem Gehäuseabschnitt ist mindestens ein mit dem Fluid befüllbarer und/oder befüllter Druckraum angeordnet. Insbesondere ist der mindestens eine Druckraum in den Gehäuseabschnitt eingebracht und/oder in diesem ausgeformt.

Das Mehrkolbenausrücksystem umfasst mehrere hydraulische Betätigungsanordnungen. Vorzugsweise sind einige oder alle Betätigungsanordnungen in Umlaufrichtung um das Ringgehäuse beabstandet voneinander angeordnet. Vorteilhaft ist, dass das Ringgehäuse und das daraus resultierend ringförmig ausgebildete Mehrkolbenausrücksystem bauraumsparend in der Bremsvorrichtung und/oder in dem Getriebegehäuse integriert werden können.

Jede Betätigungsanordnung umfasst genau eine Kolbenbaugruppe, wobei die Kolbenbaugruppe einen hydraulisch bewegbaren Kolben aufweist. Bei einer hydraulischen Druckbeaufschlagung kann der Kolben, insbesondere ausgehend von einer Ausgangsstellung, einen Betätigungshub zur Einleitung einer Betätigungskraft in die Bremseinrichtung ausführen. Insbesondere kann der Kolben bei und/oder nach der Ausführung des Betätigungshubs eine Druckkraft als Betätigungskraft in eine Lamellenpaketanordnung der Bremseinrichtung einleiten, wenn das Mehrkolbenausrücksystem in der Bremsvorrichtung integriert ist. Durch die Betätigungskraft werden die Reiblamellen der Lamellenpaketanordnung zur Erzeugung einer Bremskraft reibschlüssig aneinandergepresst. Beispielsweise umfasst das Mehrkolbenausrücksystem acht, zehn, zwölf, vierzehn oder sechzehn Kolbenbaugruppen.

Vorzugsweise umfasst jede Betätigungsanordnung eine Federbaugruppe, welche eine Rückstelleinrichtung umfasst. Vorzugsweise ist die Rückstelleinrichtung dazu ausgebildet, den Kolben der jeweiligen Betätigungsanordnung zurückzustellen, insbesondere in die Ausgangsstellung zurückzustellen. Bevorzugt führt der Kolben einen Rückhub aus, wenn er mittels der Rückstelleinrichtung zurückgestellt wird.

Erfindungsgemäß ist jedem Gehäuseabschnitt eine erste Betätigungsanordnung mit einer ersten Kolbenbaugruppe und eine zweite Betätigungsanordnung mit einer zweiten Kolbenbaugruppe zugeordnet. Vorzugsweise sind an jedem Gehäuseabschnitt genau zwei Betätigungsanordnungen angeordnet. Die erste Kolbenbaugruppe umfasst einen ersten Kolben und die zweite Kolbenbaugruppe umfasst einen zweiten Kolben. Insbesondere sind an jedem Gehäuseabschnitt genau zwei Kolben angeordnet.

Gemäß der Erfindung ist in jedem Gehäuseabschnitt genau ein Druckraum angeordnet. Vorzugsweise sind der erste Kolben der ersten Betätigungsanordnung und der zweite Kolben der zweiten Betätigungsanordnung, die dem genau einen Gehäuseabschnitt zugeordnet sind, in dem Druckraum des Gehäuseabschnitts hydraulisch bewegbar angeordnet. Insbesondere teilen sich der erste Kolben und der zweite Kolben den Druckraum als gemeinsamen Druckraum.

Eine weitere bevorzugte Ausführungsform der Erfindung sieht vor, dass der erste Kolben den Betätigungshub in dem Druckraum in die axiale Richtung ausführen kann. Vorzugsweise kann der zweite Kolben den Betätigungshub in dem Druckraum in eine axiale Gegenrichtung ausführen. Insbesondere sind die beiden Kolben bei der hydraulischen Druckbeaufschlagung in dem Druckraum gegenläufig bewegbar.

Eine mögliche konstruktive Umsetzung der Erfindung sieht vor, dass der Druckraum einen ersten Druckraumabschnitt und einen zweiten Druckraumabschnitt umfasst, wobei der erste Druckraumabschnitt strömungstechnisch mit dem zweiten Druckraumabschnitt verbunden ist. Bevorzugt ist der erste Kolben in dem ersten Druckraumabschnitt in die axiale Richtung hydraulisch bewegbar angeordnet. Insbesondere ist der zweite Kolben in dem zweiten Druckraumabschnitt in die axiale Gegenrichtung hydraulisch bewegbar angeordnet. Beispielsweise sind die beiden Druckraumabschnitte durch mindestens einen Endanschlag abschnittsweise geteilt, wobei die Kolben in der Ausgangsstellung an dem mindestens einen Endanschlag anliegen und nach dem Betätigungshub wieder zu diesem zurückgestellt werden. Optional nutzen die beiden Kolben denselben Endanschlag oder es kann jedem Kolben ein eigener Endanschlag zugeordnet sein.

In einer weiteren möglichen konstruktiven Umsetzung der Erfindung weist jeder Gehäuseabschnitt eine zu der Hauptachse winklige, insbesondere rechtwinkligen, Ebene auf. Bevorzugt verläuft die Ebene zwischen dem ersten Druckraumabschnitt und dem zweiten Druckraumabschnitt. Optional sind die erste Betätigungsanordnung und die zweite Betätigungsanordnung in Bezug auf die Ebene gegenüberliegend und/oder spiegelbildlich angeordnet und/oder ausgebildet. Alternativ sind die erste Betätigungsanordnung und die zweite Betätigungsanordnung in Bezug auf die Ebene axial und/oder radial versetzt zueinander angeordnet.

In einer bevorzugten Ausführungsform der Erfindung umfasst jede Betätigungsanordnung des Mehrkolbenausrücksystems eine Halteplatte. Für den Fall, dass die Betätigungsanordnung die erste Kolbenbaugruppe mit dem ersten Kolben aufweist, ist die Halteplatte vorzugsweise in der axialen Richtung auf den der Betätigungsanordnung zugeordneten Gehäuseabschnitt aufgesetzt. Für den Fall, dass die Betätigungsanordnung die zweite Kolbenbaugruppe mit dem zweiten Kolben aufweist, ist die Halteplatte vorzugsweise in der axialen Gegenrichtung auf den der Betätigungsanordnung zugeordneten Gehäuseabschnitt aufgesetzt. Insbesondere ist die Halteplatte kraft- und/oder formschlüssig mit dem Gehäuseabschnitt verbunden, beispielsweise mit diesem verschraubt.

In einer möglichen konstruktiven Umsetzung der Erfindung umfasst die Federbaugruppe ein Federblech, einen Federteller und eine Spiralfeder. Bevorzugt ist der Federteller form- und/oder kraftschlüssig mit dem Federblech verbunden. Vorzugsweise ist die Spiralfeder zwischen dem Federteller und der Halteplatte angeordnet. Insbesondere stützt sich die Spiralfeder mit einem Ende an der Halteplatte und mit dem anderen Ende an dem Federteller ab.

In einer weiteren möglichen konstruktiven Umsetzung der Erfindung ist die Federbaugruppe mit der Kolbenbaugruppe der entsprechenden Betätigungsanordnung wirkverbunden, sodass die Kolbenbaugruppe die Federbaugruppe bei Ausführung des Betätigungshubs und des Rückhubs mitnimmt. Beispielsweise ist der jeweilige Kolben der Kolbenbaugruppe form- und/oder kraftschlüssig mit dem Federblech verbunden. Vorzugsweise drückt der Kolben gegen das Federblech, wenn er den Betätigungshub ausführt. Dadurch werden das Federblech und der daran befestigte Federteller entgegen der Vorlast der Spiralfeder in die axiale Richtung mitgenommen, wenn es sich um den ersten Kolben handelt, oder in die axiale Gegenrichtung mitgenommen, wenn es sich um den zweiten Kolben handelt. Wenn die hydraulische Druckbeaufschlagung des jeweiligen Kolbens nachlässt, wird dieser durch die Vorlast der Spiralfeder in die Ausgangsstellung zurückgestellt. Insbesondere dient die Spiralfeder als Rückstelleinrichtung.

Eine mögliche Ausführungsform der Erfindung sieht vor, dass der erste Kolben dazu angeordnet und/oder ausgebildet ist, die Betätigungskraft bei dem Betätigungshub in die axiale Richtung in die Lamellenpaketanordnung einzuleiten, insbesondere wenn das Mehrkolbenbremssystem in der Bremsvorrichtung integriert ist. Bevorzugt werden die Reiblamellen dadurch in der axialen Richtung reibschlüssig aneinandergelegt, um die Bremskraft zu erzeugen. Vorzugsweise umfasst das Mehrkolbenausrücksystem eine Kraftverteilungseinrichtung, welche dazu ausgebildet ist, die Betätigungskraft des ersten Kolbens in Umlaufrichtung des Ringgehäuses zu verteilen und über mehrere Krafteinleitungsbereiche in die Lamellenpaketanordnung einzuleiten. Beispielsweise umfasst die Kraftverteilungseinrichtung einen Kraftverteilerring. Vorzugsweise ist der Kraftverteilerring bezogen auf die Hauptachse koaxial und/oder konzentrisch zu dem Ringgehäuse angeordnet. Vorzugsweise kann die Kraftverteilungseinrichtung bei dem Betätigungshub des ersten Kolbens in die axiale Richtung bewegt werden, wobei sie hierfür beispielsweise unmittelbar in axialer Richtung vor dem ersten Kolben angeordnet ist und/oder mit dem ersten Kolben wirkverbunden ist. Bevorzugt kann die Kraftverteilungseinrichtung bei dem Betätigungshub des ersten Kolbens in eine Kontaktstellung mit der Lamellenpaketanordnung überführt werden, in welcher er gegen die Kraftverteilungseinrichtung drückt.

Die Erfindung sieht vor, dass das Mehrkolbenausrücksystem eine Druckübertragungsvorrichtung umfasst. Vorzugsweise ist die Druckübertragungsvorrichtung dazu ausgebildet und/oder angeordnet, die durch den zweiten Kolben übertragene Betätigungskraft auf die Lamellenpaketanordnung zu übertragen und/oder in diese einzuleiten. Insbesondere steht die Druckübertragungsvorrichtung hierfür mit dem zweiten Kolben in einer Wirkverbindung.

Gemäßder Erfindung umfasst die Druckübertragungsvorrichtung mindestens eine Verbindungseinrichtung, insbesondere ein ringförmiges Verbindungsblech oder mehrere Verbindungsstäbe. Ergänzend umfasst die Druckübertagungseinrichtung mindestens eine Zugeinrichtung, insbesondere einen Zuganker. Vorzugsweise ist die Zugeinrichtung mit der Verbindungseinrichtung wirkverbunden, z.B. mit dieser verpresst.

Gemäß der Erfindung ist die Verbindungseinrichtung mit dem zweiten Kolben wirkverbunden. Hierzu steht die Verbindungseinrichtung bevorzugt in der axialen Gegenrichtung mit dem Federblech, das mit dem zweiten Kolben wirkverbunden ist, in einer Wirkverbindung. Zum Beispiel sind die Verbindungseinrichtung und das Federblech form- und/oder kraftschlüssig verbunden, insbesondere mit diesem verschraubt. Insbesondere ist die Verbindungseinrichtung gemeinsam mit dem Federblech in die axiale Gegenrichtung bewegbar, wenn der zweite Kolben den Betätigungshub ausführt. Beispielsweise erstreckt sich die Zugeinrichtung ausgehend von dem Federblech in die axiale Richtung. Bevorzugt kann die Zugeinrichtung durch die Verbindungseinrichtung bei dem Betätigungshub des zweiten Kolbens in eine Druckstellung überführt werden. Vorzugsweise übt die Zugeinrichtung in der Druckstellung eine in die axiale Gegenrichtung gerichtete Druckkraft gegen die Lamellenpaketanordnung aus, wobei sie die Lamellenpaketanordnung hierzu zumindest abschnittsweise umgreift, insbesondere wenn das Mehrkolbenausrücksystem einen Bestandteil der Bremsvorrichtung bildet. Insbesondere ist die Zugeinrichtung so angeordnet und/oder ausgebildet, dass sie die Druckkraft in der axialen Gegenrichtung in die Lamellenpaketanordnung einleiten kann, sodass die Reiblamellen dadurch in die axiale Gegenrichtung reibschlüssig aneinandergelegt werden, um die Bremskraft zu erzeugen.

Vorteilhaft ist, dass die Betätigungskräfte des ersten Kolbens und des zweiten Kolbens in der axialen Richtung und in der axialen Gegenrichtung in die Lamellenpaketanordnung eingeleitet werden können, wenn das Mehrkolbenausrücksystem in der Bremsvorrichtung integriert ist. Die Reiblamellen der Lamellenpaketanordnung können also von beiden Seiten zusammengedrückt und reibschlüssig aneinandergelegt werden. Dadurch kann in vorteilhafter Weise ein externer Kraftfluss der Bremseinrichtung vermieden werden. Insbesondere ist der Kraftschluss geschlossen und/oder die Betätigung der Bremsbetätigung im Bauraum, z.B.im durch das Getriebegehäuse umgebenen Nassraum, kann axialkraftfrei erfolgen. Vorteilhaft ist zudem, dass ein Kraftniveau der Bremseinrichtung maximiert werden kann.

Eine Bremsvorrichtung für ein Fahrzeug mit dem Mehrkolbenausrücksystem nach der bisherigen Beschreibung und/oder nach einem der Ansprüche 1 bis 7 bildet einen weiteren Gegenstand der Erfindung. Die Bremsvorrichtung umfasst eine Bremseinrichtung zur Erzeugung einer Bremskraft. Vorzugsweise bildet das Mehrkolbenausrücksystem eine Aktuatoreinrichtung zur Aktivierung der Bremseinrichtung.

Die Bremseinrichtung weist eine Lamellenpaketanordnung mit einer Mehrzahl an Reiblamellen auf. Vorzugsweise ist die Lamellenpaketanordnung koaxial und/oder konzentrisch zu der Hauptachse angeordnet. Bei den Reiblamellen handelt es sich um Innenlamellen, welche z.B. rotierbar angeordnet sind und um Außenlamellen, welche z.B. rotationsfest angeordnet sind. Bevorzugt sind die Innenlamellen von einem z.B. rotierbaren Innenlamellenträger getragen. Vorzugsweise sind die Reiblamellen in der axialen Richtung und in der axialen Gegenrichtung bewegbar, insbesondere gegeneinander verschiebbar, angeordnet und/oder ausgebildet.

**In** einer bevorzugten Ausführungsform der Erfindung greift die mindestens eine Verbindungseinrichtung der Druckübertragungseinrichtung des Mehrkolbenausrücksystems in der axialen Richtung durch das Lamellenpaket, insbesondere durch die Außenlamellen, hindurch. Vorzugsweise umgreift die Zugeinrichtung zumindest abschnittsweise die in der axialen Richtung angeordnete äußerste Reiblamelle, insbesondere Außenlamelle, und drückt in der Druckstellung gegen diese, sodass die Reiblamellen der Lamellenpaketanordnung in der axialen Gegenrichtung reibschlüssig aneinandergelegt werden und die Bremskraft erzeugen können.

In einer weiteren bevorzugten Ausführungsform der Erfindung drückt die Kraftverteilungseinrichtung des Mehrkolbenausrücksystems in der Kontaktstellung gegen die in der axialen Gegenrichtung angeordnete äußerste Reiblamelle, insbesondere Außenlamelle, sodass die Reiblamellen der Lamellenpaketanordnung in der axialen Richtung reibschlüssig aneinandergelegt werden und die Bremskraft erzeugen können.

Einen weiteren Gegenstand der Erfindung bildet eine Getriebeanordnung für ein Fahrzeug. Die Getriebeanordnung weist ein Getriebegehäuse, ein Getriebe, z.B. ein Planentengetriebe, und die Bremsvorrichtung nach der bisherigen Beschreibung und/oder nach dem Anspruch 8 oder 9 auf. Das Getriebe und die Bremsvorrichtung sind in dem Getriebegehäuse aufgenommen.

Optional weist das Ringgehäuse des Mehrkolbenausrücksystems mindestens eine Befestigungsschnittstelle auf, mittels welcher sie an dem Getriebegehäuse befestigt ist. Die mindestens eine Befestigungsschnittstelle kann z.B. durch mehrere Schraubeinrichtungen, einen zu der Hauptachse konzentrischen und/oder koaxialen Sicherungsring oder eine zu der der Hauptachse konzentrische Zentralmutter gebildet sein. Vorteilhaft ist, dass dadurch Bremsmomente bei der Betätigung der Bremseinrichtung mittels des Mehrkolbenausrücksystems über das Getriebegehäuse abgestützt werden können.

Bevorzugt greifen die Außenlamellen formschlüssig in das Getriebegehäuse ein, sodass sie gegen eine Rotation gesichert sind und sodass sie in der axialen Richtung und in der axialen Gegenrichtung bewegbar sind. Vorzugsweise ist die Bremsvorrichtung, insbesondere die Bremseinrichtung, so in dem Getriebegehäuse angeordnet, dass sie das Getriebe auf die Hauptachse bezogen radial umgreift.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Draufsicht auf eine Bremsvorrichtung für ein Fahrzeug;
- Figur 2: eine Draufsicht in einer axialen Gegenrichtung auf die Bremsvorrichtung;
- Figur 3: eine Schnittansicht der Bremsvorrichtung aus der Figur 2 entlang der Schnittlinie B-B;
- Figur 4: ein Querschnitt der Bremsvorrichtung aus der Figur 2 entlang der Schnittlinie A-A.

Einander entsprechende oder gleiche Teile sind in den Figuren jeweils mit den gleichen Bezugszeichen versehen.

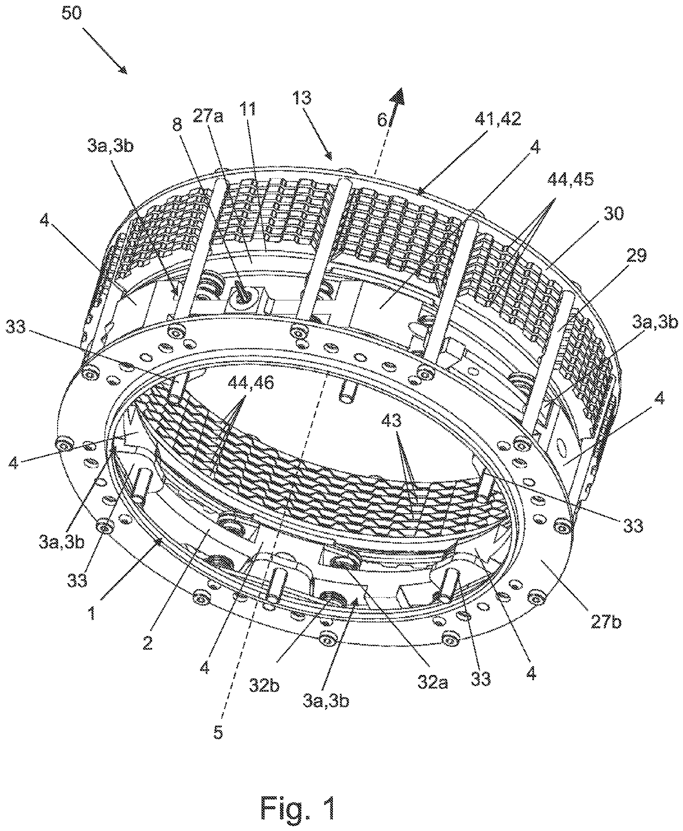

In der Figur 1 ist eine perspektivische Draufsicht auf eine Bremsvorrichtung 40 für ein Fahrzeug gezeigt. Die Bremsvorrichtung 40 kann einen Bestandteil einer Getriebeanordnung mit einem Getriebegehäuse, das mit einem Nassraumfluid befüllt ist, und mit einem Getriebe, insbesondere mit Planetengetriebe, bilden. Sie kann gemeinsam mit dem Getriebe in dem Getriebegehäuse angeordnet sein und dort eine Bremskraft zum Abbremsen mindestens einer Komponente des Getriebes erzeugen. Das Getriebe und die Bremsvorrichtung 40 sind bezogen auf eine Hauptachse 5 der Bremsvorrichtung 40 konzentrisch und/oder koaxial angeordnet, wobei die Bremsvorrichtung 40 das Getriebe radial umgibt. Die Hauptachse 5 definiert eine axiale Richtung 6.

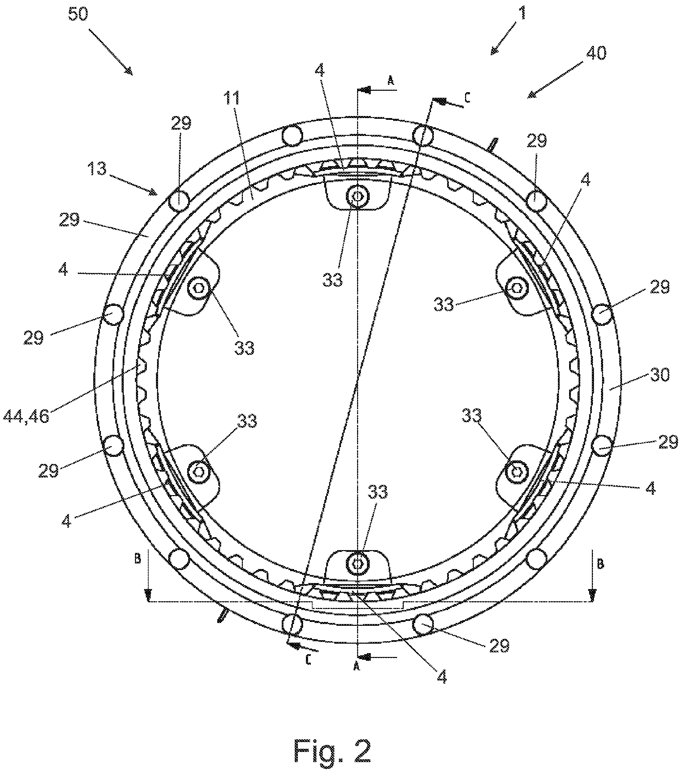

Die Figur 2 zeigt die Bremsvorrichtung 40 in einer Draufsicht in eine axiale Gegenrichtung. Bezugnehmend auf die Figuren 1 und 2 weist die Bremsvorrichtung 40 eine Bremseinrichtung 41 auf, welche als eine nasslaufende Reiblamellenbremse ausgebildet ist. Die Bremseinrichtung 41 weist eine Lamellenpaketanordnung 42 mit rotierbaren Innenlamellen 43 und mit rotationsfesten Außenlamellen 44 auf. Die Lamellen 43, 44 sind in die axiale Richtung 6 und in eine axiale Gegenrichtung beweglich, insbesondere verschiebbar angeordnet. Die Außenlamellen 44 greifen mit einer Außenverzahnung 45 formschlüssig in das Getriebegehäuse ein, sodass sie axial bewegbar sind und zugleich gegen eine Rotation um die Hauptachse 5 gesichert sind. Die Innenlamellen 43 sind auf einem rotierbaren Innenlamellenträger angeordnet. Durch die axiale Bewegung können die Lamellen 43, 44 reibschlüssig aneinandergelegt werden und dadurch eine Bremskraft zum Abbremsen der Komponente des Getriebes erzeugen. Hierzu weisen die Außenlamellen 44 eine Innenverzahnung 46 auf, mit der sie mit einer passenden Verzahnung der Komponente kämmen können.

Die Bremsvorrichtung 40 weist ein Mehrkolbenausrücksystem 1 auf, welches eine Aktuatoreinrichtung zur Betätigung der Bremseinrichtung durch Übertragung und Einleitung von Druckkräften als Betätigungskräfte bildet. Das Mehrkolbenausrücksystem 1 ist bezogen auf die Hauptachse 5 konzentrisch und/oder koaxial zu der Bremseinrichtung 41 angeordnet. Es weist ein Ringgehäuse 2 und mehrere, z.B. zwölf, Betätigungsanordnungen 3a, 3b auf. Die Betätigungsanordnungen 3a, 3b sind in Umlaufrichtung des Ringgehäuses 2 an dem Ringgehäuse 2 angeordnet und abschnittsweise in diesem aufgenommen.

Das Ringgehäuse 2 umfasst mehrere, z.B. sechs, Gehäuseabschnitte 4, wobei in jedem Gehäuseabschnitt 4 genau ein mit einem Fluid befüllbarer und/oder befüllter Druckraum 9 integriert ist. Die Druckräume 9 in dem Ringgehäuse 2 sind untereinander strömungstechnisch durch mindestens einen Strömungskanal verbunden, der in dem Ringgehäuse 2 integriert ist. Das Ringgehäuse 2 weist einen Fluideinlass 8 auf, durch welchen das Fluid in den Strömungskanal und in die Druckräume 9 eingeleitet werden kann. Das Fluid ist unterschiedlich zu dem Nassraumfluid, das in dem Getriebegehäuse angeordnet ist. Über mehrere Befestigungsschnittstellen 33, die in Umlaufrichtung um die Hauptachse 5 beanstandet voneinander an dem Ringgehäuse 2 angeordnet sind, kann das Mehrkolbenausrücksystem 1 an dem Getriebegehäuse befestigt sein. Die Befestigungsschnittstellen 33 sind als Schraubeinrichtungen ausgebildet. Durch die Befestigung des Ringgehäuses 2 an dem Getriebegehäuse können Bremsmomente bei der Betätigung der Bremseinrichtung 41 auf das Getriebegehäuse abgeleitet werden.

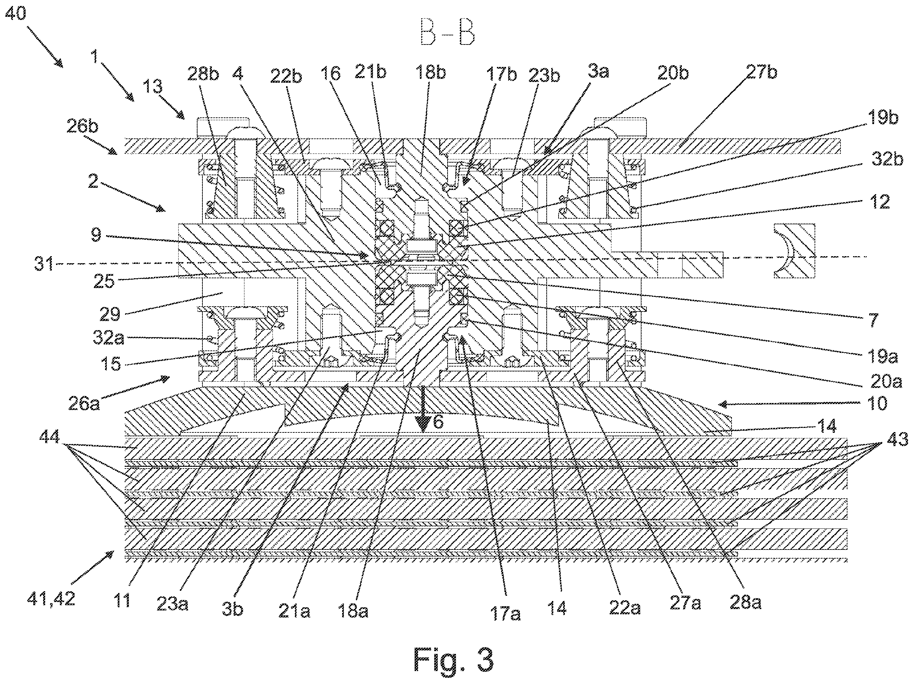

In der Figur 3 ist eine Schnittansicht der Bremsvorrichtung aus der Figur 2 entlang der Schnittlinie B-B gezeigt. Zu erkennen sind die Außenlamellen 44 und die Innenlamellen 43 der Lamellenpaketanordnung 42 der Bremseinrichtung 41, ein Gehäuseabschnitt 4 des Ringgehäuses 2 des Mehrkolbenausrücksystems 1 und eine Betätigungsanordnung 3 des Mehrkolbenausrücksystems 1.

Der Gehäuseabschnitt 4 weist den genau einen Druckraum 9 auf, welcher in den Gehäuseabschnitt 4 eingebracht ist. Der Druckraum 9 umfasst einen ersten Druckraumabschnitt 15 und einen zweiten Druckraumabschnitt 16, welche strömungstechnisch miteinander verbunden sind. Die Druckraumabschnitte 15, 16 sind durch einen Endanschlag 25 voneinander abschnittsweise getrennt, wobei der Endanschlag 25 durcheine Wand des Gehäuseabschnitts 4 gebildet ist.

Dem Gehäuseabschnitt 4 sind eine erste Betätigungsanordnung 3a und eine zweite Betätigungsanordnung 3b zugeordnet. Bezogen auf eine zu der Hautachse 5 rechtwinklige Ebene 31, die die beiden Gehäuseabschnitte 15, 16 voneinander abschnittsweise trennt und sich durch den Endanschlag 25 erstreckt, sind die beiden Betätigungsanordnungen 3a, 3b gegenüberliegend spiegelbildlich zueinander angeordnet und/oder ausgebildet.

Die erste Betätigungsanordnung 3a umfasst eine erste Kolbenbaugruppe 17a mit einem ersten Kolben 18a. Die zweite Betätigungsanordnung umfasst eine zweite Kolbenbaugruppe 17b mit einem zweiten Kolben 18b. Mit dem ersten Kolben 18a ist ein erster Führungskörper 7 verschraubt und mit dem zweiten Kolben 18b ist ein zweiter Führungskörper 12 verschraubt.

Der erste Kolben 18a und der erste Führungskörper 7 sind gemeinsam in dem ersten Druckraumabschnitt 15 in die axiale Richtung 6 beweglich angeordnet, wobei der erste Führungskörper 7 den ersten Kolben 18a führt. Der zweite Kolben 18b und der zweite Führungskörper 12 sind gemeinsam in dem zweiten Druckraumabschnitt 16 in eine axiale Gegenrichtung beweglich angeordnet, wobei der zweite Führungskörper 12 den zweiten Kolben 18b führt.

Jede Betätigungsanordnung 3a, 3b umfasst eine Gleitbanddichtung 19a, 19b, eine weitere Dichtung 20a, 20b und eine axial-translatorische Dichtung 21a, 21b. Die Gleitbanddichtungen 19a, 19b und die weiteren Dichtungen 19a, 19b sind als O-Ringe ausgebildet und an dem jeweiligen Kolben 18a, 18b bewegungsfest angeordnet. Sie dichten den jeweiligen Druckraumabschnitt 15, 16 bei der Bewegung des Kolbens 18a, 18b ab. Die axial-translatorischen Dichtungen 21a, 21b dichten den jeweiligen Druckraumabschnitt 15, 16 gegenüber dem mit dem Nassraumfluid befüllten Getriebegehäuse ab.

Die erste Betätigungsanordnung 3a weist eine erste Halteplatte 22a auf, welche in der axialen Richtung 6 an dem Gehäuseabschnitt 4 angeordnet und mit diesem mittels zweier Schrauben 23a verschraubt ist. Die zweite Betätigungsanordnung 3a weist eine zweite Halteplatte 22b auf, welche in der axialen Gegenrichtung an dem Gehäuseabschnitt 4 angeordnet ist und mit diesem mittels zweier Schrauben 23b verschraubt ist.

Der erste Kolben 18a kann bei einer hydraulischen Druckbeaufschlagung mittels des in den Druckraum 9 eingeleiteten Fluids relativ zu dem Gehäuseabschnitt 4 und zu der daran befestigten ersten Halteplatte 22a einen Betätigungshub in die axiale Richtung 6 ausführen. Durch den Betätigungshub wird der erste Kolben 18a in eine erste Betätigungsstellung überführt, in der die Bremseinrichtung 41 betätigt ist.

Der zweite Kolben 18b kann bei einer hydraulischen Druckbeaufschlagung mittels des in den Druckraum 9 eingeleiteten Fluids relativ zu dem Gehäuseabschnitt 4 und zu der daran befestigten ersten Halteplatte 22b einen Betätigungshub in die axiale Gegenrichtung ausführen. Durch den Betätigungshub wird der zweite Kolben 18b in eine zweite Betätigungsstellung überführt, in der die Bremseinrichtung 41 betätigt ist.

Die erste Betätigungsanordnung 3a weist eine erste Federbaugruppe 26a auf und die zweite Betätigungsanordnung 3b weist eine zweite Federbaugruppe 26b auf. Die erste Federbaugruppe 26a umfasst ein erstes Federblech 27a und zwei erste Federteller 28a und die zweite Federbaugruppe 26b umfasst ein zweites Federblech 27b und zwei zweite Federteller 28b. Das erste Federblech 27a ist in der axialen Richtung 6 vor der ersten Halteplatte 22a angeordnet und das zweite Federblech 27b ist in der axialen Gegenrichtung vor der zweiten Halteplatte 22b angeordnet. Jede Halteplatte 22a, 22b weist Aussparungen auf, durch die Federteller 28a, 28b hindurchragen. Die Federteller 28a, 28b sind kegelstumpfförmig ausgebildet und mit dem jeweiligen Federblech 27a, 27b verschraubt. Jede Federbaugruppe 26a, 26b weist zwei Spiralfedern 32a, 32b auf, welche an den entsprechenden Federtellern 28a, 28b angeordnet sind und diese umgeben. Die Spiralfedern 32a, 32b stützen sich mit einem Ende an der jeweiligen Halteplatte 22a, 22b ab und mit dem anderen Ende an Abstützflächen der jeweiligen Federteller 28a, 28b ab.

Der erste Kolben 18a ist form- und/oder kraftschlüssig mit dem ersten Federblech 27a verbunden. Bei dem Betätigungshub des ersten Kolbens 18a wird das erste Federblech 27a gemeinsam mit den jeweiligen Federtellern 28a entgegen einer Vorlast der jeweiligen Spiralfedern 32a in die axiale Richtung 6 bewegt. Die Spiralfedern 32a fungieren als Rückstelleinrichtungen, welche den ersten Kolben 18a bei Nachlassen der hydraulischen Druckbeaufschlagung axial gegengerichtet in die Ausgangsstellung zurückstellen.

Der zweite Kolben 18a ist form- und/oder kraftschlüssig mit dem zweiten Federblech 27b verbunden. Bei dem Betätigungshub des zweiten Kolbens 18b wird das zweite Federblech 27b gemeinsam mit den jeweiligen Federtellern 28b entgegen einer Vorlast der jeweiligen Spiralfedern 32b in die axiale Gegenrichtung bewegt. Die Spiralfedern 32b fungieren als Rückstelleinrichtungen, welche den zweiten Kolben 18b bei Nachlassen der hydraulischen Druckbeaufschlagung axial gerichtet in die Ausgangsstellung zurückstellen.

Die erste Betätigungsanordnung 3a umfasst eine Kraftverteilungseinrichtung 10 zur Verteilung und Übertragung der Betätigungskraft des ersten Kolbens 18a auf die Reiblamellenpaketanordnung 42. Die Kraftverteilungseinrichtung 10 ist in der axialen Richtung 6 unmittelbar vor dem ersten Kolben 18a angeordnet. Bei dem Betätigungshub des ersten Kolbens 18a drückt dieser gegen die Kraftverteilungseinrichtung 10, sodass die gemeinsam mit dem ersten Kolben 18a in die axiale Richtung 6 bewegt wird. Die Kraftverteilungseinrichtung 10 umfasst einen Kraftverteilerring 11 welcher bezogen auf die Hauptachse 5 konzentrisch und/oder koaxial zu dem Ringgehäuse 2 angeordnet ist, wobei der Kraftverteilerring 11 mehrere Krafteinleitungsbereiche 14 aufweist. Die Krafteinleitungsbereiche 14 pressen in der Betätigungsstellung des ersten Kolbens 18a gegen eine in der axialen Gegenrichtung angeordnete äußerste Außenlamelle 45 und leiten damit die von dem ersten Kolben 18a übertragende Betätigungskraft in die diese axial gerichtet ein. Der Kraftverteilerring 11 weist eine Außenverzahnung auf, mit der die Kraftverteilungseinrichtung 10 in korrespondierende Innenverzahnungen des Getriebegehäuses des Getriebes eingreifen kann. Dadurch ist die Kraftverteilungseinrichtung 10 in dem Getriebegehäuse drehfest gesichert und in der axialen Richtung 6 bewegbar angeordnet.

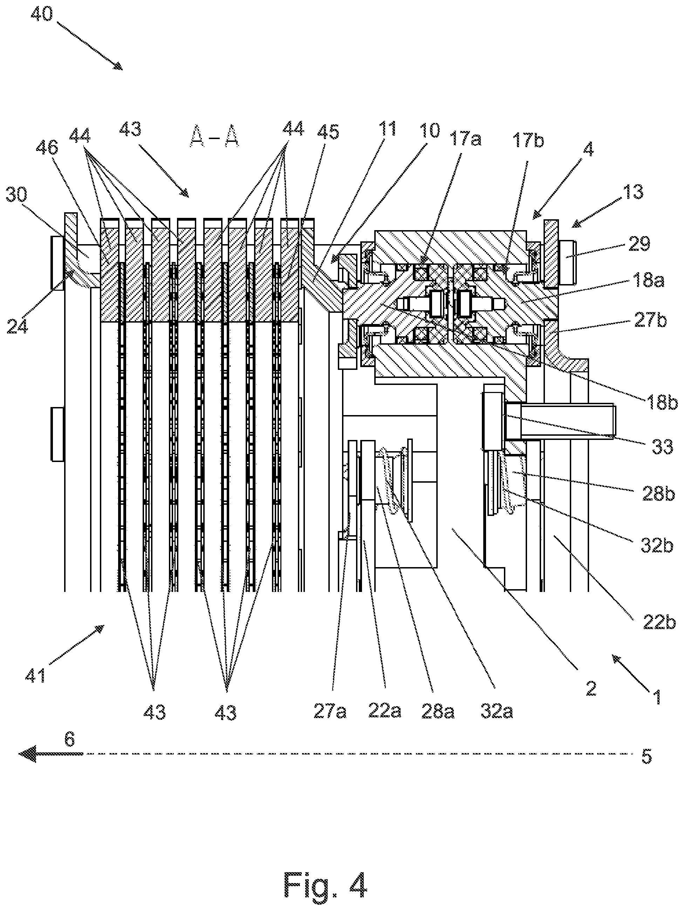

Die zweite Betätigungsanordnung 3b weist eine Druckübertragungseinrichtung 13 zur Übertragung und Einleitung der Betätigungskraft des zweiten Kolbens 18b in die Reiblamellenpaketanordnung 42 auf. Die Druckübertragungseinrichtung 13 ist in unterschiedlichen Perspektiven aus den Figuren 1, 2 und in der Figur 4 zu entnehmen, wobei die Figur einen Querschnitt der Bremsvorrichtung 40 aus der Figur 2 entlang der Schnittlinie A-A zeigt.

Die Druckübertragungseinrichtung 13 umfasst mindestens eine Verbindungseinrichtung 29, die als mehrere Verbindungsstäbe ausgebildet sind. Die Verbindungsstäbe verlaufen von der zweiten Betätigungsanordnung 3b des Mehrkolbenausrücksystem 1 in axialer Richtung 6 zu einer in der axialen Richtung 6 äußersten Außenlamelle 46 der Lamellenpaketanordnung 42. Hierzu erstrecken sich die Verbindungsstäbe durch die Lamellenpaketanordnung 42, insbesondere durch die Außenlamellen 44, hindurch. Jeder Verbindungsstab ist mit einer als Zuganker ausgebildeten Zugeinrichtung 30 form- und/oder kraftschlüssig verbunden, z.B. durch eine Pressverbindung 24 verpresst. Die Zugeinrichtung 30 umgreift die Lamellenpaketanordnung 42, insbesondere die in der axialen Richtung 6 äußerste Außenlamelle 46, zumindest abschnittsweise.

Die Verbindungseinrichtung 29 ist mit dem zweiten Federblech 27b wirkverbunden, z.B. verschraubt. Dadurch wird die Verbindungseinrichtung 29 gemeinsam mit dem zweiten Federblech 27b in die axiale Gegenrichtung mitgenommen, wenn der zweite Kolben 18b den Betätigungshub ausführt. Die Zugeinrichtung 30 wird bei dem Betätigungshub des zweiten Kolbens 18b durch die Verbindungseinrichtung 29 mitgenommen und in die axiale Gegenrichtung bewegt, sodass sie eine Druckstellung einnimmt, in der sie axial gegengerichtet gegen die in der axialen Richtung 6 äußerste Außenlamelle 46 drückt und die Lamellen 43, 44 der Lamellenpaketanordnung 42 reibschlüssig zur Erzeugung der Bremskraft aneinanderlegt.

Somit wirken die Betätigungskräfte der beiden Kolben 18a, 18b als Druckkräfte von beiden Seiten auf die Lamellenpaketanordnung 42 ein. Ein Kraftniveau der Bremseinrichtung 41 kann dadurch in vorteilhafter Weise erhöht und ein externer Kraftfluss, insbesondere auf das Getriebegehäuse, vermieden werden.

### Bezugszeichenliste

- 1: Mehrkolbenausrücksystem
- 2: Ringgehäuse
- 3a: erste Betätigungsanordnung
- 3b: zweite Betätigungsanordnung
- 4: Gehäuseabschnitte
- 5: Hauptachse
- 6: axiale Richtung
- 7: erster Führungskörper
- 8: Fluideinlass
- 9: Druckräume
- 10: Kraftverteilungseinrichtung
- 11: Kraftverteilerring
- 12: zweiter Führungskörper
- 13: Druckübertragungseinrichtung
- 14: Krafteinleitungsbereiche
- 15: erster Druckraumabschnitt
- 16: zweiter Druckraumabschnitt
- 17a: erste Kolbenbaugruppe
- 17b: zweite Kolbenbaugruppe
- 18a: erster Kolben
- 18b: zweiter Kolben
- 19a, b: Gleitbanddichtungen
- 20a, b: weitere Dichtungen
- 21a, b: axial-translatorische Dichtungen
- 22a: erste Halteplatte
- 22b: zweite Halteplatte
- 23a, b: Schrauben
- 24: Pressverbindung
- 25: Endanschlag
- 26a: erste Federbaugruppe
- 26b: zweite Federbaugruppe
- 27a: erstes Federblech
- 27b: zweites Federblech
- 28a: erster Federteller
- 28b: zweiter Federteller
- 29: Verbindungseinrichtung
- 30: Zugeinrichtung
- 31: Ebene
- 32a, b: Spiralfedern
- 33: Befestigungsschnittstellen

- 40: Bremsvorrichtung
- 41: Bremseinrichtung
- 42: Lamellenpaketanordnung
- 43: Innenlamellen
- 44: Außenlamellen
- 45: in axialer Gegenrichtung äußerste Außenlamelle
- 46: in axialer Richtung äußerste Außenlamelle

## Patentansprüche

1. Mehrkolbenausrücksystem (1) für eine Bremsvorrichtung (40) eines Fahrzeugs,
mit einem Ringgehäuse (2), wobei das Ringgehäuse (2) eine Hauptachse (5) aufweist, wobei die Hauptachse (5) eine axiale Richtung (6) definiert,
wobei das Ringgehäuse (2) mehrere Gehäuseabschnitte (4) umfasst, wobei in jedem Gehäuseabschnitt (4) mindestens ein mit einem Fluid befüllbarer und/oder befüllter Druckraum (9) angeordnet ist,
mit mehreren hydraulischen Betätigungsanordnungen (3a, 3b), wobei jede Betätigungsanordnung (3a, 3b) eine Kolbenbaugruppe (17a, 17b) mit einem hydraulisch bewegbaren Kolben (18a, 18b) aufweist, wobei der jeweilige Kolben (18a, 18b) bei einer hydraulischen Druckbeaufschlagung einen Betätigungshub zur Einleitung einer Betätigungskraft in eine Bremseinrichtung (41) der Bremsvorrichtung (40) ausführen kann,
wobei jedem Gehäuseabschnitt (4) eine erste Betätigungsanordnung (3a) mit einer ersten Kolbenbaugruppe (17a) und eine zweite Betätigungsanordnung (3b) mit einer zweiten Kolbenbaugruppe (17b) zugeordnet ist, wobei die erste Kolbenbaugruppe (17a) einen ersten Kolben (18a) und die zweite Kolbenbaugruppe (17b) einen zweiten Kolben (18b) umfasst,
wobei in jedem Gehäuseabschnitt (4) genau ein Druckraum (9) angeordnet ist, wobei der erste Kolben (18a) und der zweite Kolben (18b) in dem Druckraum (9) hydraulisch bewegbar angeordnet sind,
wobei das Mehrkolbenausrücksystem (1) eine Druckübertragungsvorrichtung (13) zur Übertragung und/oder Einleitung der durch den zweiten Kolben (18b) übertragenen Betätigungskraft auf/in eine Lamellenpaketanordnung (42) der Bremseinrichtung (41) umfasst,
**dadurch gekennzeichnet, dass** die Druckübertragungsvorrichtung (13) mindestens eine Verbindungseinrichtung (29) und eine mit der Verbindungseinrichtung (29) wirkverbundene Zugeinrichtung (30) umfasst, wobei die Verbindungseinrichtung (29) und die Zugeinrichtung (30) bei dem Betätigungshub des zweiten Kolbens (18b) in die axiale Gegenrichtung bewegbar sind und wobei die mindestens eine Zugeinrichtung (30) bei dem Betätigungshub des zweiten Kolbens (18b) in eine Druckstellung (31) zur Ausübung einer in die axiale Gegenrichtung gerichteten Druckkraft gegen die Lamellenpaktanordnung (42) überführbar ist.

2. Mehrkolbenausrücksystem (1) nach Anspruch 1, **dadurch gekennzeichnet, dass** der erste Kolben (18a) den Betätigungshub in dem Druckraum (9) in die axiale Richtung (6) ausführen kann und dass der zweite Kolben (18b) den Betätigungshub in dem Druckraum (9) in eine axiale Gegenrichtung ausführen kann.

3. Mehrkolbenausrücksystem (1) nach einem der vorhergehenden Ansprüche, **dadurch gekennzeichnet, dass** der Druckraum (9) einen ersten Druckraumabschnitt (15) und einen zweiten Druckraumabschnitt (16) umfasst, wobei der erste Druckraumabschnitt (15) strömungstechnisch mit dem zweiten Druckraumabschnitt (16) verbunden ist, wobei der erste Kolben (18a) in dem ersten Druckraumabschnitt (15) hydraulisch bewegbar angeordnet ist und wobei der zweite Kolben (18b) in dem zweiten Druckraumabschnitt (16) hydraulisch bewegbar angeordnet ist.

4. Mehrkolbenausrücksystem (1) nach Anspruch 3, **dadurch gekennzeichnet, dass** eine zu der Hauptachse (5) rechtwinklige Ebene (31) zwischen dem ersten Druckraumabschnitt (15) und dem zweiten Druckraumabschnitt (16) angeordnet ist, wobei die erste Betätigungsanordnung (3a) und die zweite Betätigungsanordnung (3b) in Bezug die Ebene (31) gegenüberliegend und/oder spiegelbildlich angeordnet und/oder ausgebildet sind oder wobei die erste Betätigungsanordnung (3a) und die zweite Betätigungsanordnung (3b) in Bezug auf die Ebene (31) axial und/oder radial versetzt zueinander angeordnet sind.

5. Bremsvorrichtung (40) für ein Fahrzeug mit dem Mehrkolbenausrücksystem (1) nach einem der vorhergehenden Ansprüche, wobei die Bremseinrichtung (41) eine Lamellenpaketanordnung (42) mit einer Mehrzahl an Reiblamellen (43, 44) umfasst.

6. Bremsvorrichtung (40) nach Anspruch 5, **dadurch gekennzeichnet, dass** sich die mindestens eine Verbindungseinrichtung (29) in axialer Richtung (6) durch die Lamellenpaketanordnung (42) hindurch erstreckt, wobei die mindestens eine Zugeinrichtung (30) die Lamellenpaketanordnung (42) zumindest abschnittsweise umgreift und bei dem Betätigungshub des zweiten Kolbens (18b) eine Druckkraft gegen die Reiblamellen (43, 44) der Lamellenpaketanordnung (42) ausüben kann.

7. Getriebeanordnung für ein Fahrzeug, **dadurch gekennzeichnet, dass** die Getriebeanordnung ein Getriebegehäuse, ein Getriebe und die Bremsvorrichtung (40) nach Anspruch 5 oder 6 umfasst, wobei das Getriebe und die Bremsvorrichtung (40) in dem Getriebegehäuse aufgenommen sind.

## Claims

1. A multi-piston release system (1) for a vehicle brake device (40),
having an annular housing (2), the annular housing (2) having a main axis (5), the main axis (5) defining an axial direction (6),
the annular housing (2) comprising a plurality of housing sections (4), at least one pressure chamber (9) that can be and/or is filled with a fluid being arranged in each housing section (4),
having a plurality of hydraulic actuating arrangements (3a, 3b), each actuating arrangement (3a, 3b) having a piston assembly (17a, 17b) with a hydraulically movable piston (18a, 18b), wherein the respective piston (18a, 18b) can, when hydraulically pressurised, perform an actuating stroke to introduce an actuating force into a braking assembly (41) of the brake device (40),
wherein each housing section (4) is associated with a first actuating arrangement (3a) with a first piston assembly (17a) and associated with a second actuating arrangement (3b) with a second piston assembly (17b), wherein the first piston assembly (17a) comprises a first piston (18a) and the second piston assembly (17b) comprises a second piston (18b),
wherein exactly one pressure chamber (9) is arranged in each housing section (4), wherein the first piston (18a) and the second piston (18b) are arranged to be hydraulically movable in the pressure chamber (9),
wherein the multi-piston release system (1) comprises a pressure transmission device (13) for transmitting and/or introducing the actuating force transmitted by the second piston (18b) to/into a multi-plate arrangement (42) of the braking assembly (41),
**characterised in that** the pressure transmission device (13) comprises at least one connecting device (29) and a traction device (30) operatively connected to the connecting device (29), wherein the connecting device (29) and the traction device (30) are movable in the axial opposite direction during the actuating stroke of the second piston (18b) and wherein the at least one traction device (30) is transferable into a pressure position (31) during the actuating stroke of the second piston (18b) to exert a compressive force directed in the opposite axial direction against the multi-plate arrangement (42).

2. The multi-piston release system (1) according to claim 1, **characterised in that** the first piston (18a) can perform the actuating stroke in the pressure chamber (9) in the axial direction (6) and **in that** the second piston (18b) can perform the actuating stroke in the pressure chamber (9) in an opposite axial direction.

3. The multi-piston release system (1) according to any one of the preceding claims, **characterised in that** the pressure chamber (9) comprises a first pressure chamber section (15) and a second pressure chamber section (16), the first pressure chamber section (15) being fluidically connected to the second pressure chamber section (16), wherein the first piston (18a) is hydraulically movable in the first pressure chamber section (15) and wherein the second piston (18b) is hydraulically movable in the second pressure chamber section (16).

4. The multi-piston release system (1) according to claim 3, **characterised in that** a plane (31) perpendicular to the main axis (5) is arranged between the first pressure chamber section (15) and the second pressure chamber section (16), wherein the first actuating arrangement (3a) and the second actuating arrangement (3b) are arranged and/or configured opposite and/or mirror-image to the plane (31) or wherein the first actuating arrangement (3a) and the second actuating arrangement (3b) are arranged axially and/or radially offset relative to one another with respect to the plane (31).

5. A brake device (40) for a vehicle having the multi-piston release system (1) according to any one of the preceding claims, wherein the braking assembly (41) comprises a multi-plate arrangement (42) having a plurality of friction plates (43, 44).

6. The brake device (40) according to claim 5, **characterised in that** the at least one connecting device (29) extends in the axial direction (6) through the multi-plate arrangement (42), wherein the at least one traction device (30) at least partly encompasses the multi-plate arrangement (42) and can exert a pressure force against the friction plates (43, 44) of the multi-plate arrangement (42) during the actuating stroke of the second piston (18b).

7. A transmission arrangement for a vehicle, **characterised in that** the transmission arrangement comprises a transmission housing, a transmission and the brake device (40) according to either one of claims 5 to 6, the transmission and the brake device (40) being accommodated in the transmission housing.

## Revendications

1. Système de dégagement à pistons multiples (1) pour dispositif de freinage (40) de véhicule,
comportant un carter annulaire (2), dans lequel le carter annulaire (2) présente un axe principal (5), dans lequel l'axe principal (5) définit une direction axiale (6),
dans lequel le carter annulaire (2) comprend plusieurs sections de carter (4), dans lequel, dans chaque section de carter (4), est agencée au moins une chambre de pression (9) qui peut être remplie et/ou qui est remplie d'un fluide,
comportant plusieurs dispositifs d'actionnement (3a, 3b) hydrauliques, chaque dispositif d'actionnement (3a, 3b) présentant un ensemble piston (17a, 17b) comportant un piston hydrauliquement mobile (18a, 18b), le piston respectif (18a, 18b) pouvant, lorsqu'il est mis sous pression hydraulique, effectuer une course d'actionnement pour introduire une force d'actionnement dans un système de freinage (41) du dispositif de freinage (40),
dans lequel chaque section de carter (4) est associée à un premier dispositif d'actionnement (3a) comportant un premier ensemble piston (17a) et à un second dispositif d'actionnement (3b) comportant un second ensemble piston (17b), le premier ensemble piston (17a) comprenant un premier piston (18a) et le second ensemble piston (17b) comprenant un second piston (18b),
dans lequel exactement une chambre de pression (9) est agencée dans chaque section de carter (4), le premier piston (18a) et le second piston (18b) étant agencés de manière à être hydrauliquement mobiles dans la chambre de pression (9),
le système de dégagement à pistons multiples (1) comprenant un dispositif de transmission de pression (13) destiné à transmettre et/ou à introduire la force d'actionnement transmise par le second piston (18b) sur/dans un agencement de paquets de disques (42) du dispositif de freinage (41),
**caractérisé en ce que** le dispositif de transmission de pression (13) comprend au moins un dispositif de liaison (29) et un dispositif de tension (30) relié fonctionnellement au dispositif de liaison (29), le dispositif de liaison (29) et le dispositif de tension (30) étant mobiles dans la direction axiale opposée pendant la course d'actionnement du second piston (18b) et le ou les dispositifs de tension (30) pouvant être transférés dans une position de pression (31) pendant la course d'actionnement du second piston (18b) pour exercer une force de pression dirigée dans la direction axiale opposée contre l'agencement de paquets de disques (42).

2. Système de dégagement à pistons multiples (1) selon la revendication 1, **caractérisé en ce que** le premier piston (18a) peut effectuer la course d'actionnement dans la chambre de pression (9) dans la direction axiale (6) et **en ce que** le second piston (18b) peut effectuer la course d'actionnement dans la chambre de pression (9) dans une direction axiale opposée.

3. Système de dégagement à pistons multiples (1) selon l'une quelconque des revendications précédentes, **caractérisé en ce que** la chambre de pression (9) comprend une première section (15) de chambre de pression et une seconde section (16) de chambre de pression, la première section (15) de chambre de pression étant reliée fluidiquement à la seconde section (16) de chambre de pression, le premier piston (18a) étant hydrauliquement mobile dans la première section (15) de chambre de pression et le second piston (18b) étant hydrauliquement mobile dans la seconde section (16) de chambre de pression.

4. Système de dégagement à pistons multiples (1) selon la revendication 3, **caractérisé en ce qu'**un plan (31) perpendiculaire à l'axe principal (5) est agencé entre la première section (15) de chambre de pression et la seconde section (16) de chambre de pression, dans lequel le premier dispositif d'actionnement (3a) et le second dispositif d'actionnement (3b) sont agencés et/ou conçus de manière opposée et/ou en miroir par rapport au plan (31) ou dans lequel le premier dispositif d'actionnement (3a) et le second dispositif d'actionnement (3b) sont agencés axialement et/ou radialement décalés l'un par rapport à l'autre par rapport au plan (31).

5. Dispositif de freinage (40) pour un véhicule avec le système de dégagement à pistons multiples (1) selon l'une quelconque des revendications précédentes, dans lequel le système de freinage (41) comprend un agencement de paquets de disques (42) comportant une pluralité de disques de friction (43, 44).

6. Dispositif de freinage (40) selon la revendication 5, **caractérisé en ce que** le ou les dispositifs de liaison (29) s'étendent dans la direction axiale (6) à travers l'agencement de paquets de disques (42), dans lequel le ou les dispositifs de tension (30) englobent l'agencement de paquets de disques (42) au moins par sections et peuvent exercer une force de pression contre les disques de friction (43, 44) de l'agencement de paquets de disques (42) pendant la course d'actionnement du second piston (18b).

7. Dispositif de transmission pour véhicule, **caractérisé en ce que** le dispositif de transmission comprend un carter de transmission, une transmission et le dispositif de freinage (40) selon la revendication 5 à 6, dans lequel la transmission et le dispositif de freinage (40) sont logés dans le carter de transmission.
